# EUROPEAN PATENT SPECIFICATION

(11) **EP 3 351 906 B1**
(45) Date of publication and mention of the grant of the patent: **14.10.2020**
(21) Application number: 17181334.8
(22) Date of filing: 14.07.2017
(51) Int. Cl.: G01D 5/14, E05F 15/40

(54) **DOOR POSITION DETECTION DEVICE FOR ELECTRIC DOOR OPENER**
TÜRPOSITIONDETEKTIONSVORRICHTUNG FÜR ELEKTRISCHEN TÜRÖFFNER
DISPOSITIF DE DÉTECTION DE POSITION DE PORTE POUR UN OUVRE-PORTE ÉLECTRIQUE

(30) Priority: 22.01.2017 CN 201720091493 U
(43) Date of publication of application: 25.07.2018
(73) Proprietor: FORESEE Garage Doors Co.,Ltd, Foshan Guangdong (CN)
(72) Inventor: JIAN, Mingshao, Foshan, Guangdong (CN)
(74) Representative: Zaboliene, Reda

(56) References cited:
- WO-A1-2009/079685
- AU-B2- 2012 244 079
- JP-A- 2005 120 697
- US-A1- 2008 000 161

## Description

### TECHNICAL FIELD

The invention relates to the technical field of electric door openers, and in particular to a door position detection device for an electric door opener.

### BACKGROUD

At present, door position detection devices for electric door openers have following schemes:
1. Adopting a photoelectric encoder, whose defects lie in that the precision is not high enough and a current position can be calculated only when the door moves for certain distance.
2. Adopting an absolute-value photoelectric encoder, whose defect lies in high cost.
3. Adopting an incremental photoelectric encoder, whose defects lie in that the door position is lost after the door is manually opened when the door opener is powered off, and devices such as limit switch are needed to regain the door position.
4. Adopting a potentiometer, whose defects lie in short service life and low precision.
5. Adopting a limit switch, whose defects lie in that only the fully open or fully closed position of the door can be known, the door cannot be detected at any intermediate position, and more complex functions cannot be realized, for example, slow start and slow stop, or partial opening, positional opening, etc. Patent documents JP 2005 120679 A, US2008/000161 A1, WO 2009/079685 A1 and AU 2012 244 079 A1 all disclose door position detection devices in which an input gear is connected via a reduction gear to an output gear. The rotation of the output gear is measured using a sensor sensing the field of one or more rotating magnets.

### SUMMARY

The invention aims to solve the above defects in existing technologies and provide a door position detection device for an electric door opener, which is simple and reasonable in structure, has long service life and high precision and can detect any position immediately; if a door is pulled randomly after the door opener is powered off, the door position detection device can know the requirement of door position detection immediately once the door opener is powered on; therefore, the problem of door position change of door openers is thoroughly solved, higher-precision door position control is realized and the electric door opener is more diversified and safer in function.

The technical scheme adopted by the invention to solve the technical problem is as follows.

A door position detection device for an electric door opener is provided according to claim 1.

The door position detection device for an electric door opener adopting this structure realizes position detection through the magnet and the magnetic angle sensor chip on the magnetic angle sensor circuit board, that is, the magnet rotates following the output gear, however, the magnetic angle sensor chip above the magnet is immovable, in this way, when the door is at any position within the travel, a unique angle exists between the magnetic field of the radially arranged magnet and the magnetic angle sensor chip, and the detection of the magnetic field angle through the magnetic angle sensor chip may acquire a high-precision (the precision may reach 12 bits, even 14 bits) position signal.

Moreover, even if a door is pulled randomly after the door opener is powered off, the door position detection device can know the requirement of door position detection immediately once the door opener is powered on; therefore, the problem of door position change of door openers is thoroughly solved, higher-precision door position control is realized and the electric door opener is more useful and safer and has longer service life.

The invention may also adopt the following technical means to solve the above problem.

As a preferred scheme, the reduction gear unit includes a first reduction gear and a second reduction gear that are engaged with each other, the first reduction gear is engaged with the input gear, and the second reduction gear is engaged with the output gear; the reduction gear unit may be combined according to different gear ratios.

According to the invention, a fixing bracket is arranged above the magnet, a connection lug is extended on the edge of the fixing bracket, a connection post mated with the connection lug is arranged on the corresponding housing, and the magnetic angle sensor circuit board is fixed on the fixing bracket; the purpose of the fixing bracket is to fix the magnetic angle sensor circuit board, a plurality of connection lugs and a plurality of connection posts are correspondingly mated and are connected through fasteners, with simple and reasonable structure.

As a preferred scheme, the magnetic angle sensor circuit board is provided with an electrical connection port, for the convenience of wiring and signal transmission.

According to the invention, a recessed cavity suitable for accommodating and fixing the magnet is arranged on the output gear, for the convenience of fixing the magnet.

As a preferred scheme, during the working process, the rotation of the output gear is less than 360 degrees, thereby making the computation program simple and being capable of acquiring the unique angle information about the door position in each condition.

In a non-claimed example, the mounting positions of the magnet and the magnetic angle sensor circuit board are exchanged each other; since the magnet and the magnetic angle sensor chip are in relative motion, supposing the magnetic angle sensor circuit board is fixed on the output gear and the magnet is fixed on the fixing bracket, the same purpose also can be achieved.

The invention has benefits as follows.

The door position detection device for an electric door opener in the invention realizes contactless detection, prolongs the service life and realizes immediate detection; if a door is pulled randomly after the door opener is powered off, the door position detection device can know the requirement of door position detection immediately once the door opener is powered on; therefore, the problem of door position change of door openers is thoroughly solved, higher-precision door position control is realized and the electric door opener is more useful and safer.

### BRIEF DESCRIPTION OF THE DRAWINGS

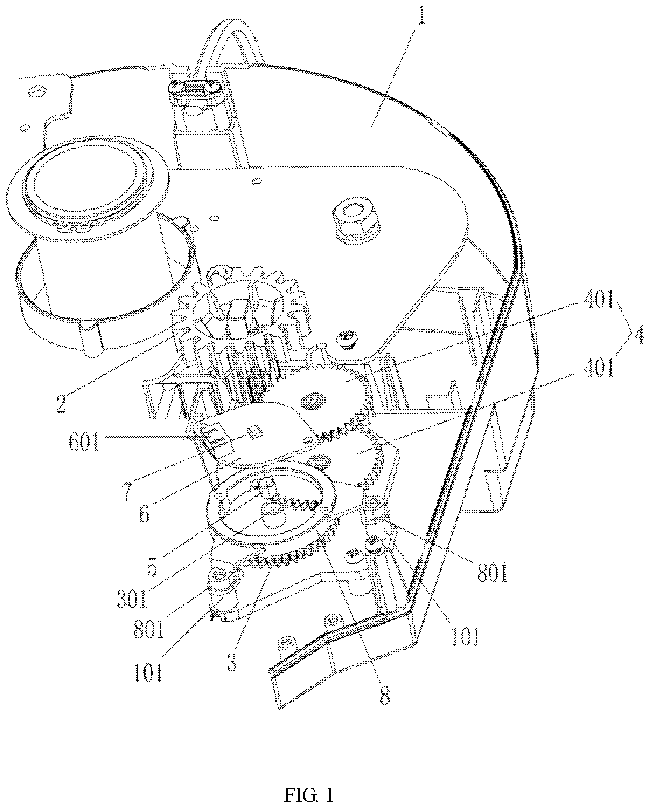

FIG. 1 is a structure diagram of the invention.

### DESCRIPTION OF THE EMBODIMENTS

The invention is described below in further detail in conjunction with accompanying drawings and embodiments.

As shown in FIG. 1, a door position detection device for an electric door opener includes a housing 1, in which an input gear 2 in connection with a driving device is mounted, characterized in that: an output gear 3 is further mounted in the housing 1, the input gear 2 and the output gear 3 are linked through a reduction gear unit 4, a magnet 5 is fixed on the output gear 3, a magnetic angle sensor circuit board 6 is fixed on the housing 1 above the magnet 5, and a magnetic angle sensor chip 7 perpendicularly corresponding to the magnet 5 is arranged on the magnetic angle sensor circuit board 6.

The door position detection device for an electric door opener adopting this structure realizes position detection through the magnet 5 and the magnetic angle sensor chip 7 on the magnetic angle sensor circuit board 6, that is, the magnet 5 rotates following the output gear 3, however, the magnetic angle sensor chip 7 above the magnet 5 is immovable, in this way, when the door is at any position within the travel, a unique angle exists between the magnetic field of the radially arranged magnet 5 and the magnetic angle sensor chip 7, and the detection of the magnetic field angle through the magnetic angle sensor chip 7 may acquire a high-precision (the precision may reach 12 bits, even 14 bits) position signal.

Moreover, even if a door is pulled randomly after the door opener is powered off, the door position detection device can know the requirement of door position detection immediately once the door opener is powered on; therefore, the problem of door position change of door openers is thoroughly solved, higher-precision door position control is realized and the electric door opener is more useful and safer and has longer service life.

The reduction gear unit 4 includes a first reduction gear 401 and a second reduction gear 402 that are engaged with each other, the first reduction gear 401 is engaged with the input gear 2, and the second reduction gear 402 is engaged with the output gear 3; the reduction gear unit 4 may be combined according to different gear ratios.

A fixing bracket 8 is arranged above the magnet 5, a connection lug 801 is extended on the edge of the fixing bracket 8, a connection post 101 mated with the connection lug 801 is arranged on the corresponding housing 1, and the magnetic angle sensor circuit board 6 is fixed on the fixing bracket 8; the purpose of the fixing bracket 8 is to fix the magnetic angle sensor circuit board 6, a plurality of connection lugs 801 and a plurality of connection posts 101 are correspondingly mated and are connected through fasteners, with simple and reasonable structure.

The magnetic angle sensor circuit board 6 is provided with an electrical connection port 601, for the convenience of wiring and signal transmission.

A recessed cavity 301 suitable for accommodating and fixing the magnet 5 is arranged on the output gear 3, for the convenience of fixing the magnet 5.

During the working process, the rotation of the output gear 3 is less than 360 degrees, thereby making the computation program simple and being capable of acquiring the unique angle information about the door position in each condition.

As a further non-claimed example, the mounting positions of the magnet 5 and the magnetic angle sensor circuit board 6 are exchanged; since the magnet 5 and the magnetic angle sensor chip 7 are in relative motion, supposing the magnetic angle sensor circuit board 6 is fixed on the output gear and the magnet 5 is fixed on the fixing bracket 8, the same purpose also can be achieved.

## Claims

1. A door position detection device configured to measure a position of a door and suitable for an electric door opener, comprising an input gear (2), a door driving device, an output gear (3), a reduction gear unit (4), a magnet (5), a fixing bracket (8), connections lugs (801), connection posts (101), a magnetic angle sensor circuit board (6), a magnetic angle sensor chip (7) and a housing (1) in which are mounted the input gear (2) in connection with the door driving device, the output gear (3) linked through the reduction gear unit (4) to the input gear (2), where a recessed cavity for accommodating and fixing the magnet (5) is arranged on the output gear (3), where the fixing bracket (8) is arranged above the magnet (5), where the connection lugs (801) are extending from an edge of said fixing bracket, the connection posts (101) matched with connection lugs (801) are arranged on the housing (1), and the magnetic angle sensor circuit board (6) is fixed on the fixing bracket above the magnet and where the magnetic angle sensor chip (7) is arranged on the magnetic sensor circuit board (6) corresponding to the mounting position of the magnet (5) in the recessed cavity and for detection of the magnetic field angle.

2. The door position detection device configured to measure a position of door according to claim 1, **characterized in that** the reduction gear unit (4) comprises a first reduction gear (401) and a second reduction gear (402) that are engaged with each other, the first reduction gear is engaged with the input gear (2), and the second reduction gear is engaged with the output gear (3).

3. The door position detection device configured to measure a position of a door according to claim 1, **characterized in that** the magnetic angle sensor circuit board (6) is provided with an electrical connection port (601).

## Patentansprüche

1. Türpositionserfassungsvorrichtung, die zum Messen der Position einer Tür konfiguriert ist und für einen elektrischen Türöffner geeignet ist, umfassend ein Eingangszahnrad (2), eine Türantriebsvorrichtung, ein Ausgangszahnrad (3), ein Untersetzungsgetriebe (4), ein Magnet (5), einen Halter (8), Verbindungsösen (801), Verbindungspfosten (101), eine magnetische Winkelsensorplatine (6), einen magnetischen Winkelsensorchip (7) und ein Gehäuse (1), in dem sich Folgendes befindet:
das Eingangszahnrad (2) in Verbindung mit der Türantriebsvorrichtung, das Ausgangszahnrad (3), das durch das Untersetzungsgetriebe (4) mit dem Eingangszahnrad (2) verbunden ist, wobei ein vertiefter Hohlraum zum Aufnehmen und Befestigen des Magneten (5) am Ausgangszahnrad (3) angeordnet ist, wobei der Halter (8) über dem Magneten (5) angeordnet ist, wobei sich die
Verbindungsösen (801) von der Kante des Halters erstrecken, wobei die Verbindungspfosten (101), die mit der Verbindungsösen (801) übereinstimmen, am Gehäuse (1) angeordnet sind, und die magnetische Winkelsensorplatine (6) am Halter über dem Magneten befestigt ist, und wobei der magnetischer Winkelsensorchip (7) entsprechend der Einbaulage des Magneten (5) im vertieften Hohlraum und zur Erfassung des Magnetfeldwinkels an der magnetischen Winkelsensorplatine (6) angeordnet ist.

2. Türpositionserfassungsvorrichtung, die zum Messen der Position einer Tür konfiguriert ist, gemäß Anspruch 1, **dadurch gekennzeichnet, dass** das Untersetzungsgetriebe (4) ein erstes Untersetzungsgetriebe (401) und ein zweites Untersetzungsgetriebe (402), die miteinander in Verbindung stehen, umfasst, wobei das erste Untersetzungsgetriebe mit dem Eingangszahnrad (2) in Verbindung steht und das zweite Untersetzungsgetriebe mit dem Ausgangszahnrad (3) in Verbindung steht.

3. Türpositionserfassungsvorrichtung, die zum Messen der Position einer Tür konfiguriert ist, gemäß Anspruch 1, **dadurch gekennzeichnet, dass** die magnetische Winkelsensorplatine (6) mit einer elektrischen Verbindungsschnittstelle (601) versehen ist.

## Revendications

1. Un dispositif de détection de position de porte configuré pour mesurer la position d'une porte et compatible avec un ouvre-porte électrique, comprenant un engrenage d'entrée (2), un dispositif d'entraînement de porte,
un engrenage de sortie (3), un réducteur (4), un aimant (5), un support de fixation (8), des barrettes de connexion (801), des bornes de connexion (101), une carte de circuit de capteur d'angle magnétique (6), une puce de capteur d'angle magnétique (7) et un boîtier (1) dans lequel sont montés
l'engrenage d'entrée (2) en liaison avec le dispositif d'entraînement de porte,
l'engrenage de sortie (3) relié par le réducteur (4) à l'engrenage d'entrée (2), où une cavité encastrée pour le logement et la fixation de l'aimant (5) est disposée sur l'engrenage de sortie (3),
où le support de fixation (8) est disposé au-dessus de l'aimant (5), où les barrettes de connexion (801) s'étendent à partir du bord dudit support de fixation, les bornes de connexion (101) assorties Aux barrettes de connexion (801) sont disposées sur le boîtier (1) et la carte de circuit de capteur d'angle magnétique (6) est fixée sur le support de fixation au-dessus de l'aimant, et où la puce de capteur d'angle magnétique (7) est disposée sur la carte de circuit imprimé de capteur magnétique (6) correspondant à la position de montage de l'aimant (5) dans la cavité encastrée et pour la détection de l'angle de champ magnétique.

2. Le dispositif de détection de position de porte configuré pour mesurer la position d'une porte selon la revendication 1, **caractérisée par le fait que** le réducteur (4) comprend un premier engrenage réducteur (401) et un deuxième engrenage réducteur (402) qui sont engagés l'un avec l'autre,
le premier réducteur est engagé avec l'engrenage d'entrée (2), et le second réducteur est engagé avec l'engrenage de sortie (3).

3. Le dispositif de détection de position de porte configuré pour mesurer la position d'une porte selon la revendication 1, **caractérisée par le fait que** la carte de circuit imprimé du capteur d'angle magnétique (6) est pourvue d'un port de connexion électrique (601).
